# EUROPÄISCHE PATENTSCHRIFT

(11) **EP 2 590 846 B1**
(45) Veröffentlichungstag und Bekanntmachung des Hinweises auf die Patenterteilung: **31.12.2014**
(21) Anmeldenummer: 11725068.8
(22) Anmeldetag: 09.06.2011
(51) Int. Cl.: B60T 8/172

(54) **VERFAHREN ZUR UNTERSTÜTZUNG DER FAHRZEUGGESCHWINDIGKEITSBERECHNUNG IN EINEM FAHRZEUG**
METHOD FOR ASSISTING IN THE CALCULATION OF A VEHICLE SPEED IN A VEHICLE
PROCÉDÉ D'ASSISTANCE AU CALCUL DE LA VITESSE D'UN VÉHICULE, MIS EN OEUVRE DANS LE VÉHICULE

(30) Priorität: 06.07.2010 DE 102010031003
(43) Veröffentlichungstag der Anmeldung: 15.05.2013
(73) Patentinhaber: Robert Bosch GmbH, 70442 Stuttgart (DE)
(72) Erfinder: HAMBORG, Jan-Oliver, 74080 Heilbronn (DE); WERNER, Frank, 71706 Markgroeningen (DE)
(86) Internationale Anmeldenummer: PCT/EP2011/059584
(87) Internationale Veröffentlichungsnummer: WO 2012/004079

(56) Entgegenhaltungen:
- WO-A1-03/064227
- WO-A1-2006/045467

## Beschreibung

Die Erfindung bezieht sich auf ein Verfahren zur Unterstützung der Fahrzeuggeschwindigkeitsberechnung in einem Fahrzeug.

### Stand der Technik

Es ist bekannt, der Berechnung der Fahrzeuggeschwindigkeit die gemessenen Raddrehzahlen zugrunde zu legen. Erfolgt die Messung während des Abbremsens des Fahrzeugs bei gleichzeitigem Eingriff eines Antiblockiersystems ABS, so sind die Raddrehzahlen schlupfbehaftet. Wird in dieser Situation der Bremsdruck an einzelnen Rädern zumindest geringfügig zurückgenommen, so erhöht sich die Raddrehzahl, die der Fahrzeuggeschwindigkeitsberechnung zugrunde gelegt werden kann. Voraussetzung für dieses Verfahren ist jedoch, dass Bremsmomente an einzelnen Rädern des Fahrzeugs moduliert werden können, was üblicherweise bei hydraulischen Radbremseinrichtungen der Fall ist.

Ein Verfahren der oben genannten Art ist zum Beispiel in der WO 2006 045 467 A1 offenbart.

Bei Bremseinrichtungen, die über den Antriebsstrang im Fahrzeug ein Bremsmoment aufbringen, beispielsweise während des rekuperativen Bremsens bei Hybrid- bzw. Elektrofahrzeugen oder bei Retardern in Nutzfahrzeugen, ist es nicht möglich, das Bremsmoment an nur einem einzelnen Rad zu reduzieren, um dieses Rad zu beschleunigen. Dies führt auf Fahrbahnen mit kleinem Reibwert dazu, dass alle Räder gleichmäßig mit Bremsschlupf behaftet sind, was zu einem systematischen Fehler bei der Berechnung der Fahrzeuggeschwindigkeit führt. Die berechnete Fahrzeuggeschwindigkeit ist kleiner als die tatsächliche Geschwindigkeit, was zu einem überbremsten Fahrzeug mit reduzierter Lenkbarkeit und einem instabilen Fahrzeugverhalten führen kann.

### Offenbarung der Erfindung

Der Erfindung liegt die Aufgabe zugrunde, die Fahrzeuggeschwindigkeit in einem Fahrzeug, das über den Antriebsstrang abgebremst wird, mit hoher Genauigkeit zu bestimmen.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren zur Unterstützung der Fahrzeuggeschwindigkeitsberechnung ist in Fahrzeugen einsetzbar, die an mindestens einer Fahrzeugachse ein Achsdifferenzial aufweisen, über das Drehzahlunterschiede zwischen dem linken und dem rechten Fahrzeugrad der gleichen Achse ausgeglichen werden kann. Des Weiteren umfasst das Fahrzeug eine Bremseinrichtung zum Abbremsen einzelner Räder der Fahrzeugachse, beispielsweise eine hydraulische oder elektrohydraulische Bremsanlage, über die radindividuell Bremsmomente erzeugt werden können.

Zur Bestimmung der Fahrzeuggeschwindigkeit wird im Falle des Abbremsens des Fahrzeugs über den Antriebsstrang zusätzlich ein Rad der Fahrzeugachse, welche mit einem Achsdifferenzial versehen ist, über die Bremsanlage mit einem größeren Bremsmoment als das gegenüberliegende Rad an der gleichen Fahrzeugachse beaufschlagt. Da die Trägheit des Antriebsstrangs groß ist gegenüber der Trägheit eines Fahrzeugrades, verändert sich die mittlere Differenzialdrehzahl nur geringfügig gegenüber der Drehzahl des gebremsten Rades. Durch den Differenzialeffekt des Achsdifferenzials wird das dem zusätzlich abgebremsten Rad gegenüberliegende Fahrzeugrad an der gleichen Achse beschleunigt. Der Beschleunigungseffekt erfolgt absolut, zumindest aber relativ gegenüber dem aktiv gebremsten Rad. Somit nähert sich die Radgeschwindigkeit des beschleunigten Rades der Fahrzeuggeschwindigkeit an, und es kann die Radgeschwindigkeit bzw. die Drehzahl des beschleunigten Rades der Berechnung der Fahrzeuggeschwindigkeit zugrunde gelegt werden.

Mit diesem Verfahren ist die Fahrzeuggeschwindigkeit mit hoher Genauigkeit auch im Falle des Abbremsens über den Antriebsstrang des Fahrzeugs möglich. Im Falle des Abbremsens über den Antriebsstrang erfolgt keine radindividuelle Bremsmomentenverteilung, sondern es werden die Fahrzeugachse und damit auch die Räder gleichmäßig mit Bremsmoment beaufschlagt. Derartige Bremssituationen treten beispielsweise beim rekuperativen Bremsen zum Aufladen eines zum Antrieb eingesetzten Elektromotors im Fahrzeug auf, wobei sowohl ein ausschließlicher elektromotorischer Antrieb als auch ein Hybridantrieb in Betracht kommt, bei dem zusätzlich zum Elektromotor auch ein Verbrennungsmotor als Antriebsquelle eingesetzt wird. Des Weiteren wird bei Retarderbremsen in Nutzfahrzeugen über den Antriebsstrang gebremst. Auch in diesem Fall ist es zweckmäßig, über das oben beschriebene Verfahren die Geschwindigkeitsermittlung zu stützen. Auch Motorschleppmomente in Brennkraftmaschinen haben ein Abbremsen des Antriebsstranges zur Folge.

In Betracht kommt das erfindungsgemäße Verfahren bei einachsig angetriebenen Fahrzeugen als auch bei Allradfahrzeugen.

Bei dem Verfahren wird über die Radbremseinrichtung vorzugsweise lediglich ein Rad einer Achse abgebremst, wohingegen das gegenüberliegende Rad an der gleichen Fahrzeugachse, die mit einem Achsdifferenzial versehen ist, kein aktives Bremsmoment über die Radbremseinrichtung aufgebracht wird. Grundsätzlich möglich ist es aber auch, beide Räder einer Achse abzubremsen, jedoch mit ungleichem Bremsmoment, wobei die Bremsmomentendifferenz zwischen den Rädern über den Differenzialeffekt des Achsdifferenzials zu einer relativen Beschleunigung des weniger abgebremsten Rades gegenüber dem stärker abgebremsten Rad führt.

Das Verfahren kann in allen Fahrsituationen angewandt werden, also sowohl bei Geradeausfahrt als auch bei Kurvenfahrt.

Gemäß einer zweckmäßigen Weiterbildung ist vorgesehen, dass die Räder an einer gemeinsamen Fahrzeugachse nacheinander einzeln abgebremst werden, wobei die jeweils nicht abgebremsten Räder bzw. die mit geringerem Bremsmoment beaufschlagten Räder der Drehzahlermittlung zur Stützung der Fahrzeuggeschwindigkeit zugrunde gelegt werden. Das Abbremsen erfolgt vorzugsweise unmittelbar aufeinander folgend. Diese Vorgehensweise hat den Vorteil, dass die beim Abbremsen eines einzelnen Rades entstehenden Giermomente sich zumindest annähernd aufheben, so dass das Fahrverhalten nicht oder nur in geringer Weise beeinträchtigt wird. Zwar entstehen beim aufeinander folgenden Abbremsen an den Rädern einer Achse in einer entsprechend aufeinander folgenden Weise Giermomente; diese heben sich aber aufgrund ihrer gegenläufigen Richtung bezogen auf ihre Wirkung auf das Gesamtfahrzeug zumindest im Wesentlichen auf.

Des Weiteren kann es für den Fall, dass an zwei Fahrzeugachsen jeweils ein Achsdifferenzial angeordnet ist, zweckmäßig sein, jeweils ein Rad jeder Fahrzeugachse abzubremsen und die Drehzahlen der nicht bzw. geringer abgebremsten Räder der Ermittlung der Fahrzeuggeschwindigkeit zugrunde zu legen. Hierbei werden insbesondere diagonal gegenüberliegende Räder der zwei Fahrzeugachsen abgebremst, um eine Kompensation von Giermomenten zu erreichen. Die diagonal gegenüberliegenden Räder werden hierbei insbesondere zeitgleich abgebremst, vorzugsweise zu dem gleichen Zeitpunkt beginnend und zum gleichen Zeitpunkt endend und zweckmäßigerweise mit gleich hohem Bremsmoment, wobei gegebenenfalls auch unterschiedlich hohe Bremsmomente sowie verschobene Anfangs- und/oder Endzeitpunkte der Bremsphase in Betracht kommen. Das diagonale Abbremsen einzelner Räder kann mit dem aufeinander folgenden, kreuzweisen Wechsel des Abbremsens der Räder der gleichen Fahrzeugachse kombiniert werden, so dass zwei aufeinander folgende, diagonale Bremsvorgänge mit wechselnder Diagonale durchgeführt werden.

Weitere Vorteile und zweckmäßige Ausführungen sind den weiteren Ansprüchen, der Figurenbeschreibung und den Zeichnungen zu entnehmen. Es zeigen:
- Fig. 1: ein Ablaufschema zur Bestimmung der Fahrzeuggeschwindigkeit in einem Fahrzeug mit Achsdifferenzialen an beiden Fahrzeugachsen,
- Fig. 2: ein Schaubild mit den Kurvenverläufen von Bremsmomenten sowie Radgeschwindigkeiten.

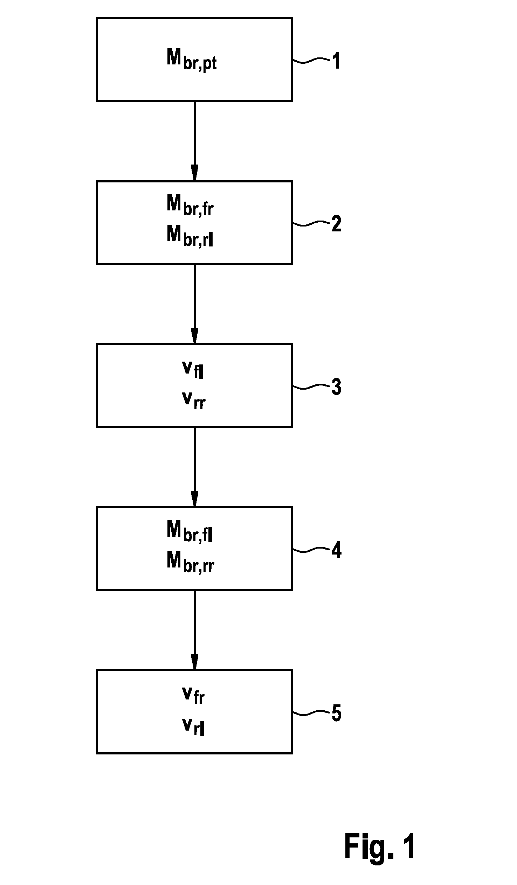

Anhand Fig. 1 wird das Ablaufschema zur Bestimmung der Fahrzeuggeschwindigkeiten in einem Fahrzeug dargestellt, das mit Achsdifferenzialen an beiden Fahrzeugachsen sowie mit einer Bremsanlage versehen ist, über die die Fahrzeugräder einzeln abgebremst werden können. Das Verfahren wird in Situationen angewandt, in denen, wie in Fig. 1 gemäß Block 1 dargestellt, über den Antriebsstrang des Fahrzeugs ein Bremsmoment M_{br,pt} aufgebracht wird. Dieses Moment M_{br,pt} im Antriebsstrang entsteht beispielsweise beim rekuperativen Bremsen zum Aufladen eines zum Antrieb eingesetzten Elektromotors im Fahrzeug, bei einem Bremsen über einen Retarder oder durch Motorschleppmomente einer Brennkraftmaschine.

Sofern ein derartiges Bremsmoment M_{br,pt} im Antriebsstrang vorliegt, wird gemäß Block 2 ein einzelnes Bremsmoment M_{br,fr} am rechten Vorderrad sowie M_{br,rl} am linken Hinterrad über die Bremsanlage des Fahrzeuges, beispielsweise eine hydraulische oder elektrohydraulische Bremsanlage erzeugt. Das jeweils gegenüberliegende Rad an den Achsen wird dagegen nicht mit einem Bremsmoment über die Bremsanlage beaufschlagt. Dies führt aufgrund des Differenzialeffektes zu einem Anstieg der Raddrehzahlen bzw. Radgeschwindigkeiten der jeweils nicht abgebremsten Fahrzeugräder und einer Annäherung an die tatsächliche Fahrzeuggeschwindigkeit. Gemäß Block 3 betrifft dies aufgrund des Abbremsen des rechten Vorderrades und des linken Hinterrades die Radgeschwindigkeiten v_{fl} am linken Vorderrad und vᵣᵣ am rechten Hinterrad. Die Radgeschwindigkeiten können der rechnerischen Ermittlung der Fahrzeuggeschwindigkeit zugrunde gelegt werden bzw. stützen die Fahrzeuggeschwindigkeit.

Das Aufbringen der Radbremsmomente M_{br,fr} und M_{br,rl} an den diagonal gegenüberliegenden Fahrzeugrädern erfolgt zeitgleich. Der Anstieg der Radgeschwindigkeiten v_{fl} und vᵣᵣ an den jeweils gegenüberliegenden Fahrzeugrädern erfolgt unmittelbar im Anschluss an das Aufbringen der Radbremsmomente.

In den nächsten Blöcken 4 und 5 wird analog zu den Blöcken 2 und 3 ein Radbremsmoment aufgebracht und anschließend die Radgeschwindigkeit bestimmt, wobei die Radbremsmomente an den bezogen auf den ersten Abbremsvorgang gegenüberliegenden Fahrzeugrädern aufgebracht werden. Gemäß Block 4 wird über die Bremsanlage ein Radbremsmoment M_{br,fl} am linken Vorderrad und M_{br,rr} am rechten Hinterrad erzeugt, woraufhin aufgrund des Differenzialeffekts die Radgeschwindigkeiten v_{fr} am rechten Vorderrad und vᵣₗ am linken Hinterrad ansteigen und sich der tatsächlichen Fahrzeuggeschwindigkeit annähern, was gemäß Block 5 ermittelt und anschließend der Berechnung der Fahrzeuggeschwindigkeit zugrunde gelegt werden kann.

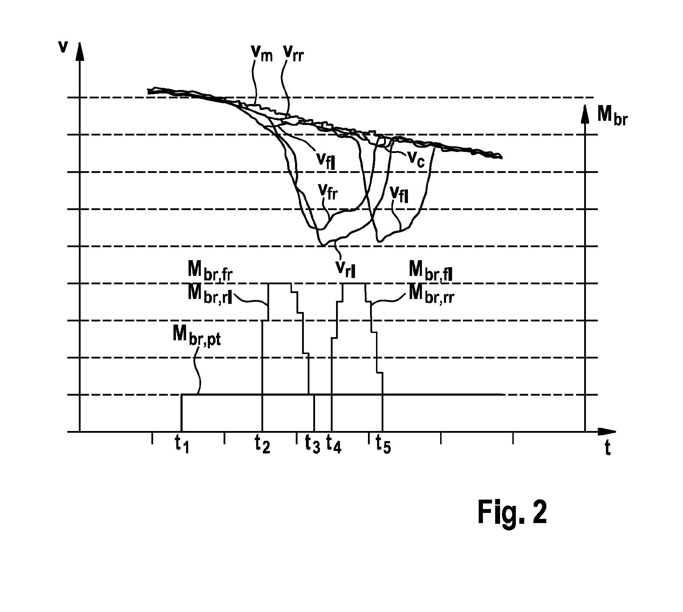

In Fig. 2 ist ein Schaubild mit dem Verlauf der Bremsmomente sowie der Fahrzeuggeschwindigkeit und Radgeschwindigkeiten dargestellt. Ausgangssituation ist das Aufbringen eines Bremsmomentes M_{br,pt} im Antriebsstrang zum Zeitpunkt t₁, wobei das Bremsmoment im Antriebsstrang beispielhaft einen konstanten Wert einnimmt. Zum Zeitpunkt t₂ wird zusätzlich ein Radbremsmoment M_{br},_{fr} am rechten Vorderrad sowie M_{br},ᵣₗ am linken Hinterrad erzeugt; der Kurvenverlauf des Bremsmomentes für diese beiden Fahrzeugräder ist identisch und endet zum Zeitpunkt t₃.

Die zugehörigen Geschwindigkeitskurven sind mit vₘ für die gemessene Fahrzeuggeschwindigkeit und v_{c} für die berechnete Fahrzeuggeschwindigkeit bezeichnet, des Weiteren sind die einzelnen Radgeschwindigkeiten eingetragen. Aufgrund des Aufbringens der Radbremsmomente am rechten Vorderrad und linken Hinterrad sinken die Radgeschwindigkeiten v_{fr} und vᵣₗ für das rechte Vorderrad und das linke Hinterrad entsprechend ab und steigen nach Beendigung der Radbremsmomente zum Zeitpunkt t₃ wieder an. Aufgrund des Differenzialeffektes steigen die Radgeschwindigkeiten v_{fl} am linken Vorderrad und vᵣᵣ am rechten Hinterrad unmittelbar nach dem Erzeugen der einzelnen Radbremsmomente an und nähern sich der tatsächlichen, durch Messung ermittelten Fahrzeuggeschwindigkeit vₘ an. Dementsprechend gleicht sich auch der Wert der berechneten Fahrzeuggeschwindigkeit v_{c}, der unter Berücksichtigung der verbesserten Radgeschwindigkeiten v_{fl} und vᵣᵣ am linken Vorderrad bzw. rechten Hinterrad ermittelt wird, der gemessenen Fahrzeuggeschwindigkeit _{Vm} an.

Zwischen den Zeitpunkten t₄ und t₅ erfolgt ein weiteres Aufbringen eines Radbremsmomentes. Abgebremst werden über ein Aufbringen eines Radbremsmomentes M_{br,fl} das linke Vorderrad sowie eines Radbremsmomentes M_{br,rr} das rechte Hinterrad. Wie den zugehörigen Geschwindigkeitskurven zu entnehmen, sinkt die Radgeschwindigkeit v_{fl} am linken Vorderrad ab, wobei über den Differenzialeffekt die Radgeschwindigkeit v_{fr} am rechten Vorderrad stark ansteigt und sich dem Wert der gemessenen Fahrzeuggeschwindigkeit vₘ annähert.

Die Radgeschwindigkeit vᵣᵣ am rechten Hinterrad sinkt nicht in gleicher Weise wie die Radgeschwindigkeit v_{fl} am linken Vorderrad ab, sondern verbleibt vielmehr annähernd auf dem Niveau der gemessenen Fahrzeuggeschwindigkeit vₘ. Ursache hierfür ist ein hoher Reibwert am rechten Hinterrad, der ein Absinken der Geschwindigkeit verhindert. Da aufgrund des hohen Reibwertes der Schlupf am rechten Hinterrad verhältnismäßig gering ist, kann die Radgeschwindigkeit am rechten Hinterrad oder gegebenenfalls am linken Hinterrad der Ermittlung der Fahrzeuggeschwindigkeit zugrunde gelegt werden.

## Patentansprüche

1. Verfahren zur Unterstützung der Fahrzeuggeschwindigkeitsberechnung in einem Fahrzeug, das ein Achsdifferenzial an mindestens einer Fahrzeugachse und eine Bremsanlage zum Abbremsen einzelner Räder der Fahrzeugachse aufweist, **dadurch gekennzeichnet, dass** im Falle des Abbremsens des Fahrzeugs über den Antriebsstrang zusätzlich ein Rad der Fahrzeugachse über die Bremsanlage mit einem größeren Bremsmoment als das gegenüberliegende, an der gleichen Fahrzeugachse angeordnete Rad beaufschlagt wird, dessen Drehzahl der Ermittlung der Fahrzeuggeschwindigkeit zugrunde gelegt wird.

2. Verfahren nach Anspruch 1, **dadurch gekennzeichnet, dass** an mindestens zwei Fahrzeugachsen jeweils ein Achsdifferenzial angeordnet ist und jeweils ein Rad dieser Fahrzeugachsen abgebremst wird, wobei die Drehzahlen der nicht bzw. geringer abgebremsten Räder der Ermittlung der Fahrzeuggeschwindigkeit zugrunde gelegt werden.

3. Verfahren nach Anspruch 2, **dadurch gekennzeichnet, dass** diagonal gegenüber liegende Räder der zwei Fahrzeugachsen abgebremst werden.

4. Verfahren nach Anspruch 3, **dadurch gekennzeichnet, dass** die diagonal gegenüber liegenden Räder der zwei Fahrzeugachsen zeitgleich abgebremst werden.

5. Verfahren nach einem der Ansprüche 1 bis 4, **dadurch gekennzeichnet, dass** die Räder an einer gemeinsamen Fahrzeugachse nacheinander einzeln abgebremst werden.

6. Verfahren nach einem der Ansprüche 1 bis 5, **gekennzeichnet durch** einen Einsatz des Verfahrens im Falle des rekuperativen Bremsens zum Aufladen eines zum Antrieb eingesetzten Elektromotors im Fahrzeug.

7. Verfahren nach einem der Ansprüche 1 bis 6, **gekennzeichnet durch** einen Einsatz des Verfahrens im Falle des Bremsens über einen Retarder im Fahrzeug.

8. Verfahren nach einem der Ansprüche 1 bis 7, **gekennzeichnet durch** einen Einsatz des Verfahrens im Falle des Bremsens des Fahrzeugs über Motorschleppmomente eines im Fahrzeug eingesetzten Verbrennungsmotors.

9. Verfahren nach einem der Ansprüche 1 bis 8, **gekennzeichnet durch** einen Einsatz des Verfahrens bei allradgetriebenen Fahrzeugen.

10. Regel- bzw. Steuergerät, das das Verfahren nach einem der Ansprüche 1 bis 9 ausführt.

11. Fahrzeug mit Regel- bzw. Steuergerät nach Anspruch 10.

## Claims

1. Method for assisting in the calculation of a vehicle speed in a vehicle which has an axle differential at at least one vehicle axle and a brake system for braking individual wheels of the vehicle axle, **characterized in that**
in the case of braking of the vehicle a larger braking torque is applied additionally to a wheel of the vehicle axle by means of the brake system via the drive train than to the opposite wheel which is arranged on the same vehicle axle and whose rotational speed is used as the basis for determining the vehicle speed.

2. Method according to Claim 1, **characterized in that** an axle differential is arranged on each of at least two vehicle axles, and in each case one wheel of these vehicle axles is braked, wherein the rotational speeds of the wheels which are not braked or which are braked to a lesser degree are used as the basis for the determination of the vehicle speed.

3. Method according to Claim 2, **characterized in that** wheels lying diagonally opposite one another on the two vehicle axles are braked.

4. Method according to Claim 3, **characterized in that** wheels lying diagonally opposite one another on the two vehicle axles are braked simultaneously.

5. Method according to one of Claims 1 to 4, **characterized in that** wheels on a common vehicle axle are braked individually in succession.

6. Method according to one of Claims 1 to 5, **characterized by** use of the method in the case of recuperative braking for charging an electric motor which is used to provide the drive in the vehicle.

7. Method according to one of Claims 1 to 6, **characterized by** use of the method in the case of braking by means of a retarder in the vehicle.

8. Method according to one of Claims 1 to 7, **characterized by** use of the method in the case of braking of the vehicle by means of engine drag torques of an internal combustion engine used in the vehicle.

9. Method according to one of Claims 1 to 8, **characterized by** use of the method in vehicles with all-wheel drive.

10. Closed-loop or open-loop control device which executes the method according to one of Claims 1 to 9.

11. Vehicle with a closed-loop or open-loop control device according to Claim 10.

## Revendications

1. Procédé d'assistance au calcul de la vitesse d'un véhicule dans un véhicule, qui présente un différentiel d'essieu au niveau d'au moins un essieu du véhicule et une installation de freinage pour freiner des roues individuelles de l'essieu du véhicule, **caractérisé en ce que**
dans le cas du freinage du véhicule par le biais de la chaîne cinématique, une roue de l'essieu du véhicule est en outre sollicitée par le biais de l'installation de freinage avec un couple de freinage plus élevé que la roue opposée disposée sur le même essieu du véhicule, dont la vitesse de rotation est prise pour base pour la détermination de la vitesse du véhicule.

2. Procédé selon la revendication 1, **caractérisé en ce qu'**un différentiel d'essieu est à chaque fois disposé au niveau d'au moins deux essieux du véhicule, et à chaque fois une roue de ces essieux du véhicule est freinée, les vitesses de rotation des roues non freinées ou moins freinées étant prises pour base pour la détermination de la vitesse du véhicule.

3. Procédé selon la revendication 2, **caractérisé en ce que** des roues situées de manière diagonalement opposée des deux essieux du véhicule sont freinées.

4. Procédé selon la revendication 3, **caractérisé en ce que** les roues situées de manière diagonalement opposée des deux essieux du véhicule sont freinées en même temps.

5. Procédé selon l'une quelconque des revendications 1 à 4, **caractérisé en ce que** les roues au niveau d'un essieu commun du véhicule sont freinées individuellement l'une après l'autre.

6. Procédé selon l'une quelconque des revendications 1 à 5, **caractérisé par** une utilisation du procédé dans le cas d'un freinage à récupération pour alimenter un moteur électrique utilisé pour l'entraînement dans le véhicule.

7. Procédé selon l'une quelconque des revendications 1 à 6, **caractérisé par** une utilisation du procédé dans le cas du freinage par le biais d'un ralentisseur dans le véhicule.

8. Procédé selon l'une quelconque des revendications 1 à 7, **caractérisé par** une utilisation du procédé dans le cas du freinage du véhicule par le biais de couples d'entraînement de moteur d'un moteur à combustion interne utilisé dans le véhicule.

9. Procédé selon l'une quelconque des revendications 1 à 8, **caractérisé par** une utilisation du procédé dans des véhicules à toutes roues motrices.

10. Appareil de réglage ou de commande qui met en oeuvre le procédé selon l'une quelconque des revendications 1 à 9.

11. Véhicule comprenant un appareil de réglage ou de commande selon la revendication 10.
